# EUROPEAN PATENT SPECIFICATION

(11) **EP 3 232 153 B1**
(45) Date of publication and mention of the grant of the patent: **28.08.2019**
(21) Application number: 17166074.9
(22) Date of filing: 11.04.2017
(51) Int. Cl.: G01B 11/25

(54) **PRECISION HAND-HELD SCANNER**
TRAGBARES PRÄZISIONSSCANGERÄT
DISPOSITIF DE BALAYAGE PORTABLE DE PRECISION

(30) Priority: 15.04.2016 US 201615130088
(43) Date of publication of application: 18.10.2017
(73) Proprietor: Lockheed Martin Corporation, Bethesda, Maryland 20817 (US)
(72) Inventor: MANN, Anthony R., Fort Worth, TX 76020 (US); LUEPKE, Richard A., Fort Worth, TX 76108 (US)
(74) Representative: Barker Brettell LLP

(56) References cited:
- EP-A1- 2 702 354
- WO-A1-2014/149702
- DE-U1-202012 102 541
- FR-A1- 2 950 138
- US-A1- 2012 120 412
- US-A1- 2013 188 012
- US-A1- 2015 381 972

## Description

### TECHNICAL FIELD

This disclosure relates generally to scanning, and more specifically to a precision hand-held scanner for measuring surface profiles.

### BACKGROUND

Surfaces of aircraft and other vehicles and products may sometimes be scanned during manufacturing. For example, the surface of an aircraft may be scanned to measure surface profiles or acquire geometric data. Typical solutions for scanning surfaces such as those of an aircraft, however, are unsuitable for hand-held operation. Relevant prior art are briefly described below.

WO2014/149702A1 discloses a noncontact optical three-dimensional measuring device that includes a first projector, a first camera, a second projector, and a second camera; a processor electrically coupled to the first projector, the first camera, the second projector, and the second camera; and computer readable media which, when executed by the processor, causes the first digital signal to be collected at a first time and the second digital signal to be collected at a second time different than the first time and determines three-dimensional coordinates of a first point on the surface based at least in part on the first digital signal and the first distance and determines three-dimensional coordinates of a second point on the surface based at least in part on the second digital signal and the second distance.

EP2702354A1 discloses a measuring system for the calculation of dimensions, including area and volume, of objects in various shapes. In particular, it discloses miniature 3D measuring equipment that is suitable for 3D measurements of subcutaneous tumours in mice. The measuring system for 3D measurements of objects in various shapes includes a handheld device that has at least 1 camera, 1 projector and a measuring chamber. The handheld device may have 2 cameras and a projector and the 3D measurement is based on stereo-vision. Said handheld device also has a processor module, a user interface, power supply and a data communication interface, and exchangeable measuring chambers to give the device the necessary flexibility and autonomy to speed up the measurement procedure, and to significantly improve the reproducibility of the measurement.

FR2950138A1 discloses a method involving calculating a relative rotating component of a scanner between two positions at acquisition instants of a pair of stereoscopic images associated with mottled points from data provided by an inertial unit of the scanner. Coordinates of a characteristic point are determined from the mottled points. A translation component between the mottled points is determined from the coordinates of the characteristic point. Transformation between the rotating component and the translation component is applied to the other mottled point during recycling phase of the mottled points. Also disclosed is a computer program comprising a set of instructions implementing a method for construction of a three-dimensional digital model of a physical surface, and a three-dimensional digitization system comprising a CPU on which the computer program is implemented.

US2013/188012A1 discloses a surface measurement module for 3D image acquisition of a subject-under-inspection. The module having: (a) a casing to house a pattern shifting device having a fixed-pattern optic through which light from a light source is passed, an output of the pattern shifting device being directed at a polarizing beam splitter and the polarized output of the splitter directed through a lens assembly comprising at least one lens element; (b) a reflector to direct the polarized output exiting the lens assembly, to illuminate a surface of the subject-under-inspection; (c) a scattered light illumination off the surface is directed back through the lens assembly for capture by an image sensor; and (d) the casing also housing the polarizing beam splitter, the lens assembly, and the image sensor. The output of the fixed-pattern optic comprises a multi-frequency pattern. The pattern shifting device may be a linear or rotating type.

US2012/120412A1 discloses a surface measurement module for 3D triangulation-based image acquisition of a surface-under-inspection and under observation by at least one camera. The module having: (a) a casing housing an optical system comprising a plurality of lens elements positioned between a fixed-pattern optic and a light source; (b) an output of said fixed-pattern optic comprising a multi-frequency pattern comprising a plurality of pixels representing at least a first and second superimposed sinusoid projected simultaneously, each of the sinusoids represented by the pixels having a unique temporal frequency and each of the pixels projected to satisfy a specific equation, (c) a shifting element to spatially shift said output of said fixed-pattern optic during projection onto the surface-under-inspection; and (d) a plurality of images captured of said output of said fixed-pattern optic during projection onto the surface-under-inspection are used for the image acquisition. US2015/381972A1 discloses using a known projection pattern to make stereo (or other camera-based) depth detection more robust. Dots are detected in captured images and compared to the known projection pattern at different depths, to determine a matching confidence score at each depth. The confidence scores may be used as a basis for determining a depth at each dot location, which may be at sub-pixel resolution. The confidence scores also may be used as a basis for weights or the like for interpolating pixel depths to find depth values for pixels in between the pixels that correspond to the dot locations.

DE202012102541U discloses a 3D camera having at least two camera modules, each having an image sensor for generating image data from a monitoring area, with a triangulation unit for calculating a depth map from the image data by means of correlation by application of a stereo algorithm, and by a lighting unit for generating a structured illumination pattern in the surveillance area, characterized in that the triangulation unit is adapted to at least reference image data of the illumination pattern train in a known distance and in operation determine distances by correlating the recorded image data with the reference image data to supplement the depth map determined by the stereo algorithm with areas in which the viewing areas of the camera modules do not overlap one another, but the structured illumination pattern in the viewing area of at least one camera module is located.

### SUMMARY OF THE DISCLOSURE

In accordance with the present disclosure, disadvantages and problems associated with measuring surface profiles may be reduced or eliminated.

According to a first aspect of the invention, there is provided a system, as defined in claim 1. The projected pattern of light may comprise a dot pattern. The first data may comprise first pixel data associated with each dot of the projected pattern of light. Further, the second data comprises second pixel data associated with each dot of the projected pattern of light. Additionally, the one or more processors may be configured to determine a location of each dot of the dot pattern using the first pixel data and the second pixel data. The one or more processors may further be configured to measure profiles of the surface based on the relative dot locations in a three-dimensional "3D" space.

According to a second aspect of the invention, there is provided a method according to claim 10, including projecting, by an LED projector, a pattern of light according to an etched pattern on a lens onto a surface by transmitting light through the lens. The method further includes capturing, by a first camera, first data associated with the projected pattern of light and capturing, by a second camera, second data associated with the projected pattern of light. Additionally, the method comprises measuring, by one or more processors, profiles of the surface using the first data captured by the first camera and the second data captured by the second camera, wherein the one or more processors are further-configured to automatically detect a range to the surface and trigger the first camera and the second camera to shutter based on the automatically detected range.

Preferred and/or optional features of the first and second aspects are set out in the dependent claims.

Technical advantages of the disclosure include providing a hand-held scanner that may be used in limited access areas. In some embodiments, the hand-held scanner is configured to collect accurate data even when the scanner or object being scanned is in motion. Additionally, in certain embodiments, the hand-held scanner provides high resolution scanning capability in the sub-thousandth range.

As another advantage, certain embodiments of the present disclosure can be used in a variety of applications where features and surfaces must be measured and analyzed to determine conformance to engineering requirements. For example, some embodiments may be used for corrosion analysis, structural repair verification, and panel-to-panel gap/mismatch analysis. Some embodiments of the hand-held scanner may be used to measure coatings to verify that they have been applied to specific height or thickness requirements, such as on low-observable aircraft applications. For example, some embodiments may be used to accurately measure the area over filled and/or unfilled fasteners relative to the surrounding aircraft surface profiles. The scan data acquired from the hand-held device, in conjunction with developed data analysis software, may quickly scan fasteners and analyze the filled and/or unfilled data profile to verify conformance to specific installation tolerances.

Another technical advantage relates to an application of the hand-held scanner in the medical field. In certain embodiments, the hand-held scanner may be used to scan external and/or exposed internal body parts. This scanning capability may be coupled with 3D printing technology to create replacement bone sections, analyze tissue and/or organs, create 3D models for prosthetics, and the like.

### BRIEF DESCRIPTION OF THE DRAWINGS

For a more complete understanding of the present disclosure and its advantages, reference is now made to the following description, taken in conjunction with the accompanying drawings, in which:
FIGURE 1 illustrates an external view of a hand-held scanner, according to certain embodiments;
FIGURE 2 illustrates a system for measuring surface profiles that includes the hand-held scanner of FIGURE 1, according to certain embodiments;
FIGURE 3 illustrates a method for measuring surface profiles, according to certain embodiments; and
FIGURE 4 illustrates a computer system used to measure surface profiles, according to certain embodiments.

### DETAILED DESCRIPTION OF THE DISCLOSURE

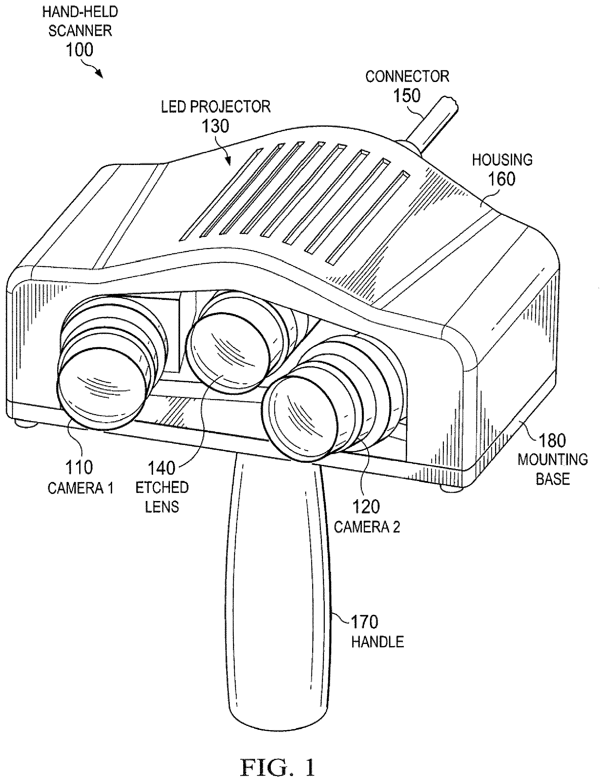

To facilitate a better understanding of the present disclosure, the following examples of certain embodiments are given. The following examples are not to be read to limit or define the scope of the disclosure. Embodiments of the present disclosure and its advantages are best understood by referring to FIGURES 1 through 4, where like numbers are used to indicate like and corresponding parts.

Consumer grade Red-Green-Blue-Depth ("RGB-D") based scanners are designed for visualization rather than manufacturing grade metrology accuracies. The surface models generated from RGB-D scanners are typically very low resolution compared to manufacturing grade metrology scanners. Although data obtained from these types of scanners can be used to resolve dimensions within a measured field, the data is not resolved to the accuracies required for certain types of manufacturing, which can be 0.001 inch or less.

Further, structured light metrology grade scanners are limited by the exposure time of the cameras. A large opening camera aperture increases the gathered light and reduces the exposure time, which makes the scanner less susceptible to scanner movement errors but also limits the depth of field measurements. A smaller opening aperture reduces the gathered light and lengthens the exposure time, which makes the scanner more susceptible to scanner movement errors but expands the depth of field measurements.

An analogy for the above described relationship to aperture opening is a standard film speed picture where all aspects of the image are in focus. The smaller opening/slower speed aperture is more susceptible to image blur when the camera or subject is moved during picture taking. In a structured light measurement system, this blurring would result in unusable data. Therefore the system must be extremely stable (i.e., motion free) when collecting data. Conversely, a higher speed film used in conjunction with a larger opening, faster speed aperture will capture moving images with clarity. However, the depth of field is shallow and only the subject is in focus. This shallow depth of field limits the ability to accurately measure higher profiled surfaces.

Some structured light scanners use the Fourier fringe pattern principle. This method projects a structured pattern (e.g., bars or stripes) on an object to be measured, and one or more cameras, precisely calibrated to a flat surface pattern, may be used to triangulate the distance to each pixel in the camera field of view based on the calibrated relationship between the projector and the one or more cameras. This phase shifting pattern, during which multiple camera shots are acquired, takes additional time to accomplish the scan and demands high stability from the scanner and the object to be measured. Additionally, the projector is typically a Digital Light Processing ("DLP") or similar bulky projector, making this arrangement unsuitable for hand-held operation.

These structured light scanning systems are also configured to accept multiple lenses to change the field of view for differing applications. To achieve this capability, the scanner housing must accommodate wider placement of the cameras relative to the projector, creating a scanner head size that cannot be used in limited access areas. Additionally, due to the increased size and weight of the scanner housing, the scanning system may require support stands, counter-balancers, or two-handed operation. Further, for limited field of view applications, this phase shifting approach also collects excessive data, which adds to processing time and data storage requirements. For example, a structured light scanning system that utilizes a four megapixel camera and collects and analyzes data from each camera pixel (i.e., four million points) is considered excessive for a four-inch by four-inch field of view.

To reduce or eliminate these and other problems, some embodiments of the present disclosure include a hand-held scanning device with a shallow depth of field for limited, close-in access to the subject being measured. Additionally, a large/fast opening aperture may be utilized to reduce or eliminate measurement errors due to scanner or subject movement during data capture. To achieve hand-held capability, the invention provides an etched lens with an LED projector to project a pattern on the subject being measured, which enables a drastic reduction in the physical size of the scanning system and allows maneuverability within limited spaces, such as an interior aircraft structure.

As another advantage, collecting centroid data at each projected pattern of 100,000 dots or less substantially reduces the amount of data collected as compared to collecting data at each camera pixel. Further, data collected from 100,000 projected points within a four-inch by four-inch maximum field of view, for example, is sufficient to define the object being measured to an accuracy of 0.001 inch or less. Additionally, the LED projector can be used in multiple ways. As an example, when measuring more reflective objects, the LED projector may be continuously illuminated and the camera lens pulsed to take the data capture of the subject surface. As another example, when measuring less reflective objects, such as darker surfaces typical of composites or coatings, the LED projector can be fired in synchronization with the camera lens. This results in a pulse (e.g., strobe) of brighter light than when in the continuous mode, better illuminating the object for data capture.

A further advantage of continuously projecting the pattern of light onto a surface is that, by analyzing the structured pattern during scanner positioning, the invention auto detects a range to the surface and triggers the camera shutter when an optimal range to the surface is achieved. As an example, the scanner apparatus may be turned on via a trigger mechanism, and the scanning apparatus may then be moved toward an object to be measured. When an optimum range is achieved, the camera's shutter may automatically trigger, capturing the data within the scene. For instance, the camera's shutter may automatically trigger upon the detection of a pre-determined number of dots within a field of view.

Other technical advantages will be readily apparent to one skilled in the art from the following figures, descriptions, and claims. Moreover, while specific advantages have been enumerated above, various embodiments may include all, some, or none of the enumerated advantages. FIGURES 1-4 provide additional details relating to a precision hand-held scanner.

FIGURE 1 illustrates a hand-held scanner 100, according to certain embodiments. As shown in the embodiment of FIGURE 1, hand-held scanner 100 comprises a first camera 110, a second camera 120, an LED projector 130, an etched lens 140, a connector 150, a housing 160, a handle 170, and a mounting base 180. In certain embodiments, hand-held scanner 100 is a single hand-held, motion independent, high resolution scanner.

First camera 110 is any camera configured to capture data. In certain embodiments, first camera 110 is a 5 megapixel ("MP"), Point Gray Camera. In other embodiments, first camera 110 may comprise a resolution higher or lower than 5MP. As an example, first camera 110 may be a 12MP camera. As another example, first camera 110 may be a 3.2MP camera. In some embodiments, first camera 110 comprises an aperture configured to reduce or eliminate measurement errors due to movement of hand-held scanner 100 and/or due to movement of the subject during data capture.

Similarly, second camera 120 is any camera configured to capture data. In certain embodiments, second camera 120 is a 5 MP, Point Gray Camera. In other embodiments, second camera 120 may comprise a resolution higher or lower than 5MP. As an example, second camera 120 may be a 12MP camera. As another example, second camera 120 may be a 3.2MP camera. In some embodiments, second camera 120 comprises an aperture configured to reduce or eliminate measurement errors due to movement of hand-held scanner 100 and/or due to movement of the subject during data capture. In certain embodiments, first camera 110 and second camera 120 are identical cameras.

LED projector 130, as shown in the illustrated embodiment of FIGURE 1, is any projector configured to project a pattern of light onto a surface. For example, LED projector 130 may project a light continuously during the scanning process. As another example, LED projector may be an LED strobe light configured to fire in synchronization with one or more features (e.g., first camera 110 and/or second camera 120) of hand-held scanner 100. In certain embodiments, LED projector 130 is a Smart Vision Lights SP30 Series LED projector configured to operate in continuous or strobe mode.

Etched lens 140, as illustrated in the embodiment of FIGURE 1, is any lens comprising an etched pattern. In certain embodiments, etched lens 140 is configured to create a structured pattern on a surface being measured. In some embodiments, the structured pattern may comprise a grid of dots. For example, structured pattern of etched lens 140 may comprise a grid of 100,000 dots or less. As another example, structured pattern of etched lens 140 may comprise a 51 by 51 grid of dots. In certain embodiments, etched lens 140 physically attaches to LED projector 130.

Connector 150, as shown in FIGURE 1, is any connector operable to couple hand-held scanner 100 to a source (e.g., a power source and/or a computer system). In certain embodiments, connector 150 is a coaxial cable connector operable to electrically couple hand-held scanner 100 to a computer system, such as computer system 210 discussed below. Additionally, connector 150 may be configured to connect hand-held scanner 100 to a power source, such as an outlet. In some embodiments, hand-held scanner 100 may comprise more than one connector 150 (e.g., a power connector and a computer system connector). In certain embodiments, hand-held scanner 100 may utilize an integral battery for a power source. In some instances, hand-held scanner 100 may comprise wireless data transfer technology that enables hand-held scanner to communicate with computer system 210 via a BLUETOOTH or WI-FI network. For example, wireless data transfer technology of hand-held scanner 100 may facilitate the transfer of data between hand-held scanner 100 and computer system 210.

In the illustrated embodiment of FIGURE 1, housing 160 is any housing configured to enclose, at least partially, first camera 110, second camera 120, and LED projector 130. Housing 160 may be made of any material suitable to enclose first camera 110, second camera 120, and LED projector 130. As an example, housing 160 may be made of plastic. In certain embodiments, housing 160 comprises one or more openings. As an example, housing 160 may comprise an opening for camera 110, camera 120, and LED projector 130. As another example, housing 160 may comprise one or more vents that allow air to flow through the scanner to reduce heat.

Handle 170, as shown in the illustrated embodiment of FIGURE 1, is any handle that assists a user with holding hand-held scanner 100. As an example, handle 170 may be a pistol grip handle made of plastic, rubber, and metal. In certain embodiments, handle 170 attaches to one or more components of hand-held scanner 100. For example, as shown in the illustrated embodiment of FIGURE 1, handle 170 attaches to the underside of mounting base 180 of hand-held scanner 100, wherein first camera 110, second camera 120, LED projector 130, and housing 160 attach to an upper side of mounting base 180. In some embodiments, mounting base 180 of hand-held scanner 100 and handle 170 are manufactured as a single component. Alternatively, mounting base 180 of hand-held scanner 100 and handle 170 may be manufactured as two separate components, wherein handle 170 physically connects to mounting base 180.

Mounting base 180, as shown in the illustrated embodiment of FIGURE 1, is any base that allows for mounting of components of hand-held scanner 100. As an example, mounting base 180 may be a mounting rail. In certain embodiments, mounting base 180 is constructed of a thermally stable material such as graphite composite. A thermally stable mounting base maintains a stable, fixed, unchanging physical relationship between first camera 110, second camera 120, LED projector 130, and etched lens 140 during changes in surrounding elements. For example, a thermally stable mounting base may maintain the spatial relationship between first camera 110 and second camera 120 during changes in temperature caused by environmental conditions and/or heating of components internal to hand-held scanner 100.

In certain embodiments, mounting base 180 attaches to one or more components of hand-held scanner 100. For example, as shown in the illustrated embodiment of FIGURE 1, handle 170 attaches to an underside of mounting base 180 of hand-held scanner 100, wherein first camera 110, second camera 120, LED projector 130, and housing 160 attach to an upper side of mounting base 180. In some embodiments, the mounting base 180 of hand-held scanner 100 and handle 170 are manufactured as a single component. Alternatively, the mounting base 180 of hand-held scanner 100 and handle 170 may be manufactured as two separate components, wherein handle 170 physically connects to the mounting base 180.

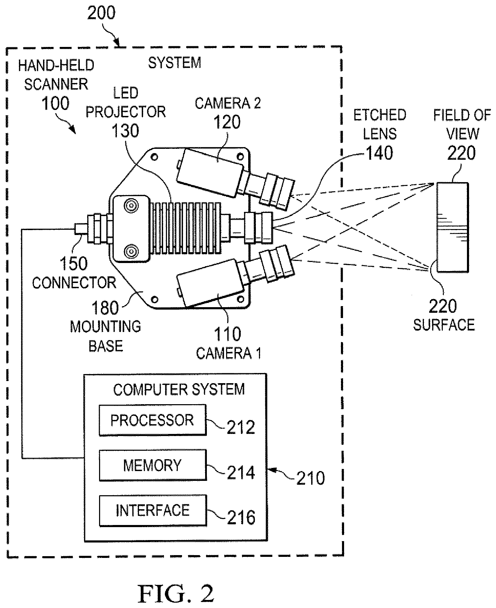

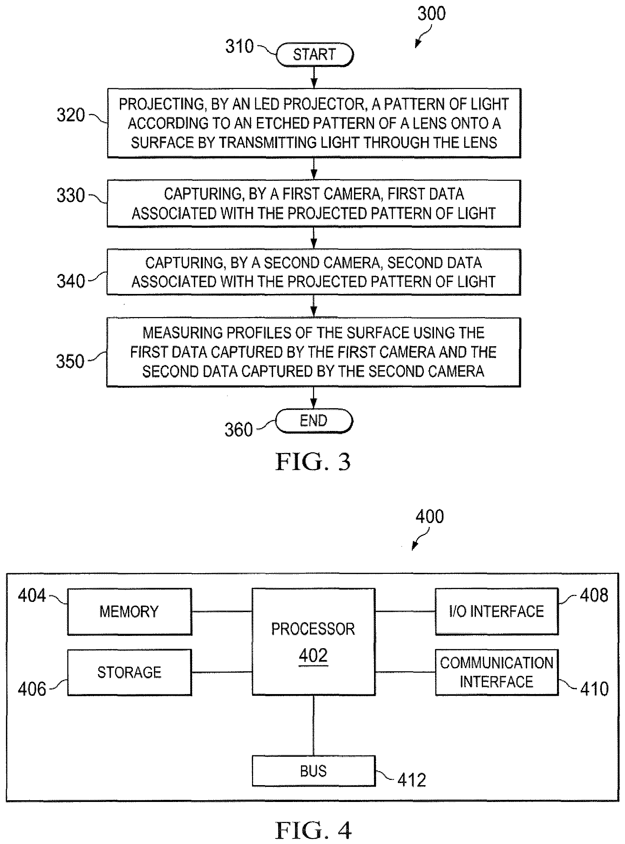

FIGURE 2 illustrates a system 200 for measuring surface profiles, according to certain embodiments. In the illustrated embodiment of FIGURE 2, system 200 comprises hand-held scanner 100 of FIGURE 1 and computer system 210. Computer system 210 includes one or more processors 212, one or more memory units 214, and/or one or more interfaces 216. Computer system 210 may be external to hand-held scanner 100. Alternatively, hand-held scanner may comprise computer system 210, or one or more components thereof. Further, individual components of hand-held scanner 100 (e.g., LED projector 130, first camera 110, and second camera 120) may each comprise one or more computer systems 210. A certain embodiment of computer system 210 is described in further detail below in FIGURE 4.

As illustrated in the embodiment of FIGURE 2, LED projector 130 is configured to project a pattern of light onto a surface 220. In certain embodiments, LED projector 130 is configured to project a pattern of light according to an etched pattern of lens 140 by transmitting light through lens 140. The projected pattern of light may comprise a dot pattern of 100,000 dots or less within a four-inch by four-inch maximum field of view (e.g., field of view 220). As another example, the projected pattern of light may comprise a 51 by 51 shadow mask grid of points within a three-inch by three-inch field of view.

In certain embodiments, system 200 of FIGURE 2 is scalable. For example, the projected pattern of light may comprise a 51 by 51 shadow mask grid of points within a one-meter by one-meter field of view. As another example, the projected pattern of light may comprise a 51 by 51 shadow mask grid of points within a two-inch by two-inch field of view. In some embodiments, the degree of accuracy of the measured profiles depends on the dot pattern relative to its field of view. For example, a 51 by 51 dot pattern projected onto a three-inch by three-inch field of view will have a higher accuracy than a 51 by 51 dot pattern projected onto a one-meter by one meter field of view.

System 200 further comprises first camera 110 configured to capture first data. In some embodiments, the first data comprises first pixel data associated with each dot of a projected dot pattern of light. For example, the first data may comprise 50 pixels associated with each dot of the projected dot pattern of light, wherein at least six of the 50 pixels are located across a diameter of the dot. Similarly, system 200 comprises second camera 120 configured to capture second data. In certain embodiments, the second data comprises second pixel data associated with each dot of a projected dot pattern of light. As an example, the second data may comprise 50 pixels associated with each dot of the projected dot pattern of light, wherein at least six of the 50 pixels are located across a diameter of the dot. As shown in the illustrated embodiment of FIGURE 2, first camera 110 and second camera 120 are mapped to the same field of view 220.

In certain embodiments, processor 212 of system 200 analyzes the first data captured by first camera 110. For example, processor 212 may analyze the pixel data captured by first camera 110 to determine a centroid of each dot of the projected dot pattern of light. Similarly, processor 212 of system 200 analyzes the second data captured by second camera 120 in certain embodiments. For instance, processor 212 may analyze the pixel data captured by second camera 110 to determine a centroid of each dot of the projected dot pattern of light. In certain embodiments, processor 212 determines the centroids of the dots in real-time.

In some embodiments, processor 212 analyzes a perimeter fringe pattern of each dot projected onto surface 220 to determine the centroid of the dot. For example, processor 212 may utilize a perimeter fringe pattern to determine a boundary of a particular dot and to calculate a centroid of the particular dot. In certain embodiments, processor 212 can accurately and consistently define the centroid of a particular dot with pixel data comprising six or more pixels across the diameter of the dot. In some examples, processor 212 is configured to calculate the centroid of a particular pixel, wherein the particular pixel comprises sub-pixels. As another example, processor 212 may be configured to calculate the centroid of a particular sub-pixel.

In system 200 of FIGURE 2, processor 212 of computer system 210 is configured to calibrate to a planer dot pattern to establish an origin of each camera and a fixed relationship between first camera 110 and second camera 120. In certain embodiments, processor 212 is further configured to measure profiles of surface 220 using the first data captured by first camera 110 and the second data captured by second camera 120. For example, processor 212 may align the centroids of the first data captured by first camera 110 with the centroids of the second data captured by second camera 120 and triangulate a distance to each centroid based on a known, fixed relationship between first camera 110 and second camera 120, creating a set of points in 3D space. Each point represents a dot location.

In certain embodiments, the set of points in 3D space (e.g., the dot locations) are linked to each other. Processor 212 may further be configured to measure profiles of surface 220 based on the relative dot locations. In some embodiments, processor 212 determines the relative dot locations in real-time. Alternatively, processor 212 may collect the centroid data associated with each dot of the projected pattern in real-time and defer the determination of the relative dot locations to a later time.

In certain embodiments, processor 212 may be configured to create a polygonised model of surface 220 based on the relative dot locations. For example, processor may create a mesh by connecting the determined 3D dot locations using a series of polygons. In some embodiments, the profiles of surface 220 may be measured based on the created model. System 200 is operable to measure surface profiles of system 200 to an accuracy of 0.001 inch or less. For example, the accuracy of the measure profiles of system 200 using data associated with a 51 by 51 dot pattern within a three-inch by three-inch field of view may be within 0.0003 inch.

In certain embodiments, LED projector 130 is configured to operate in a continuous mode. For example, LED projector 130 may be configured to continuously project a pattern of light onto surface 220 while first camera 110 is pulsed to capture the first data associated with the continuously projected pattern of light and second camera 120 is pulsed to capture the second data associated with the continuously projected pattern of light. LED projector 130 may be configured to operate in a continuous mode when measuring more reflective objects.

In some embodiments, LED projector 130 is configured to operate in a pulse (e.g., strobe) mode. As an example, LED projector 130 may be configured to project a pattern of light onto surface 220 by pulsing light in synchronization with a pulse of first camera 110 and a pulse of second camera 120, wherein first camera 110 is pulsed to capture the first data associated with the projected pattern of light and second camera 120 is pulsed to capture the second data associated with the projected pattern of light. LED projector 130 may be configured in pulse mode when system 200 is measuring less reflective objects, such as darker surfaces typical of composites or coatings. A pulse of light results in a brighter light than when LED projector is in a continuous mode, which better illuminates the object for data capture.

In certain embodiments, processor 212 is configured to automatically detect a desired field of view, and first camera 110 and/or second camera 120 is configured to capture the data in response to the automatic detection of the desired field of view. As an example, a processor of first camera 110 may be operable to detect a desired three-inch by three-inch field of view (e.g., field of view 220) and, in response to the detection, automatically trigger a shutter of first camera 110, thereby capturing the first data.

In operation of example embodiments of FIGURES 1 and 2, LED projector 130 of hand-held scanner 100 projects a dot pattern of light according to an etched pattern of lens 140 onto a surface of an aircraft, such as a fastener head filled with a low observable fill material, by transmitting light through lens 140. First camera 110 then captures first data comprising first pixel data associated with each dot of the pattern projected onto the filled fastener head. Similarly, second camera captures second data comprising second pixel data associated with each dot of the projected pattern. The first camera 110 and second camera 120 pixel data is analyzed for a perimeter fringe pattern of each dot projected onto surface 220 to define a centroid of each dot, and the dot centroids from first camera 110 and second camera 120 are aligned. Based on a known, fixed relationship between first camera 110 and second camera 120, a distance is triangulated to each dot centroid to create a set of points (e.g., relative dot locations) in 3D space which are linked to each other. This linked set of points results in a polygonised (tessellated) surface, which is used to measure surface profiles of the filled fastener head.

FIGURE 3 illustrates a method 300 for measuring surface profiles, according to certain embodiments. Method 300 of FIGURE 3 starts at step 310. At step 320, an LED projector (e.g., LED projector 130) projects a pattern of light according to an etched pattern of a lens (e.g., etched lens 140) onto a surface (e.g., surface 220) by transmitting light through the lens. The step then moves to step 330, where a first camera (e.g., first camera 110) captures first data associated with the projected pattern of light. In certain embodiments, the projected pattern of light comprises a dot pattern, and the first data comprises first pixel data associated with each dot of the projected dot pattern. At step 340, a second camera (e.g., second camera 120) captures second data associated with the projected pattern of light. In some embodiments, the second data may comprise second pixel data associated with each dot of the projected dot pattern.

In certain embodiments, the first camera and the second camera are mapped to a same field of view (e.g., field of view 220). For example, the first camera may capture data associated with a 51 by 51 projected dot pattern within a three-inch by three-inch field of view, and the second camera may capture data associated with the 51 by 51 dot pattern projected within the same three-inch by three-inch field of view.

At step 350 of method 300, as illustrated in FIGURE 3, a processor measures profiles of the surface using the first data captured by the first camera and the second data captured by the second camera. As an example, the processor may determine a 3D location of each dot of the dot pattern and measure profiles of the surface based on the relative dot locations. As another example, the processor may create a 3D polygonised model of the surface based on the relative dot locations and measure profiles of the surface based on the polygonised model. In certain embodiments, the measured surface profiles have an accuracy of 0.001 inch or less. Method 300 ends at step 360.

Modifications, additions, or omissions may be made to the method depicted in FIGURE 3. The method may include more, fewer, or other steps. For example, the LED projector may project a next pattern of light according to the etched pattern of the lens onto a next surface by transmitting light through the lens, the first camera may capture third data associated with the next projected pattern, and the second camera may capture fourth data associated with the next projected pattern.

As another example, the LED projector may continuously project the pattern of light onto the surface while the first camera is pulsed to capture the first data associated with the continuously projected pattern of light and the second camera is pulsed to capture the second data associated with the continuously projected pattern of light. As yet another example, the first camera may be pulsed to capture the first data associated with the projected pattern of light, the second camera may be pulsed to capture the second data associated with the projected pattern of light, and the LED projector may be configured to project the pattern of light onto the surface by pulsing light in synchronization with the pulse of the first camera and the pulse of the second camera. The steps of method 300 may be performed in parallel or in any suitable order. Further, any suitable component of system 200 may perform one or more steps of method 300.

FIGURE 4 illustrates a computer system used to measure surface profiles, according to certain embodiments. One or more computer systems 400 (e.g., computer system 210) perform one or more steps of one or more methods described or illustrated herein. In particular embodiments, one or more computer systems 400 provide functionality described or illustrated herein. In particular embodiments, software running on one or more computer systems 400 performs one or more steps of one or more methods described or illustrated herein or provides functionality described or illustrated herein. Particular embodiments include one or more portions of one or more computer systems 400. Herein, reference to a computer system may encompass a computing device, and vice versa, where appropriate. Moreover, reference to a computer system may encompass one or more computer systems, where appropriate.

This disclosure contemplates any suitable number of computer systems 400. This disclosure contemplates computer system 400 taking any suitable physical form. As example and not by way of limitation, computer system 400 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 400 may include one or more computer systems 400; be unitary or distributed; span multiple locations; span multiple machines; span multiple data centers; or reside in a cloud, which may include one or more cloud components in one or more networks. Where appropriate, one or more computer systems 400 may perform without substantial spatial or temporal limitation one or more steps of one or more methods described or illustrated herein. As an example and not by way of limitation, one or more computer systems 400 may perform in real time or in batch mode one or more steps of one or more methods described or illustrated herein. One or more computer systems 400 may perform at different times or at different locations one or more steps of one or more methods described or illustrated herein, where appropriate.

In particular embodiments, computer system 400 includes a processor 402 (e.g., processor 212) memory 404 (e.g., memory 214), storage 406, an input/output (I/O) interface 408, a communication interface 410 (e.g., interface 216), and a bus 412. Although this disclosure describes and illustrates a particular computer system having a particular number of particular components in a particular arrangement, this disclosure contemplates any suitable computer system having any suitable number of any suitable components in any suitable arrangement.

In particular embodiments, processor 402 includes hardware for executing instructions, such as those making up a computer program. As an example and not by way of limitation, to execute instructions, processor 402 may retrieve (or fetch) the instructions from an internal register, an internal cache, memory 404, or storage 406; decode and execute them; and then write one or more results to an internal register, an internal cache, memory 404, or storage 406. In particular embodiments, processor 402 may include one or more internal caches for data, instructions, or addresses. This disclosure contemplates processor 402 including any suitable number of any suitable internal caches, where appropriate. As an example and not by way of limitation, processor 402 may include one or more instruction caches, one or more data caches, and one or more translation lookaside buffers (TLBs). Instructions in the instruction caches may be copies of instructions in memory 404 or storage 406, and the instruction caches may speed up retrieval of those instructions by processor 402. Data in the data caches may be copies of data in memory 404 or storage 406 for instructions executing at processor 402 to operate on; the results of previous instructions executed at processor 402 for access by subsequent instructions executing at processor 402 or for writing to memory 404 or storage 406; or other suitable data. The data caches may speed up read or write operations by processor 402. The TLBs may speed up virtual-address translation for processor 402. In particular embodiments, processor 402 may include one or more internal registers for data, instructions, or addresses. This disclosure contemplates processor 402 including any suitable number of any suitable internal registers, where appropriate. Where appropriate, processor 402 may include one or more arithmetic logic units (ALUs); be a multi-core processor; or include one or more processors 402. Although this disclosure describes and illustrates a particular processor, this disclosure contemplates any suitable processor.

In particular embodiments, memory 404 includes main memory for storing instructions for processor 402 to execute or data for processor 402 to operate on. As an example and not by way of limitation, computer system 400 may load instructions from storage 406 or another source (such as, for example, another computer system 400) to memory 404. Processor 402 may then load the instructions from memory 404 to an internal register or internal cache. To execute the instructions, processor 402 may retrieve the instructions from the internal register or internal cache and decode them. During or after execution of the instructions, processor 402 may write one or more results (which may be intermediate or final results) to the internal register or internal cache. Processor 402 may then write one or more of those results to memory 404. In particular embodiments, processor 402 executes only instructions in one or more internal registers or internal caches or in memory 404 (as opposed to storage 406 or elsewhere) and operates only on data in one or more internal registers or internal caches or in memory 404 (as opposed to storage 406 or elsewhere). One or more memory buses (which may each include an address bus and a data bus) may couple processor 402 to memory 404. Bus 412 may include one or more memory buses, as described below. In particular embodiments, one or more memory management units (MMUs) reside between processor 402 and memory 404 and facilitate accesses to memory 404 requested by processor 402. In particular embodiments, memory 404 includes random access memory (RAM). This RAM may be volatile memory, where appropriate Where appropriate, this RAM may be dynamic RAM (DRAM) or static RAM (SRAM). Moreover, where appropriate, this RAM may be single-ported or multi-ported RAM. This disclosure contemplates any suitable RAM. Memory 404 may include one or more memory units 404, where appropriate. Although this disclosure describes and illustrates particular memory, this disclosure contemplates any suitable memory.

In particular embodiments, storage 406 includes mass storage for data or instructions. As an example and not by way of limitation, storage 406 may include a hard disk drive (HDD), a floppy disk drive, flash memory, an optical disc, a magneto-optical disc, magnetic tape, or a Universal Serial Bus (USB) drive or a combination of two or more of these. Storage 406 may include removable or non-removable (or fixed) media, where appropriate. Storage 406 may be internal or external to computer system 400, where appropriate. In particular embodiments, storage 406 is non-volatile, solid-state memory. In particular embodiments, storage 406 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 406 taking any suitable physical form. Storage 406 may include one or more storage control units facilitating communication between processor 402 and storage 406, where appropriate. Where appropriate, storage 406 may include one or more storages 406. Although this disclosure describes and illustrates particular storage, this disclosure contemplates any suitable storage.

In particular embodiments, I/O interface 408 includes hardware, software, or both, providing one or more interfaces for communication between computer system 400 and one or more I/O devices. Computer system 400 may include one or more of these I/O devices, where appropriate. One or more of these I/O devices may enable communication between a person and computer system 400. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 408 for them. Where appropriate, I/O interface 408 may include one or more device or software drivers enabling processor 402 to drive one or more of these I/O devices. I/O interface 408 may include one or more I/O interfaces 408, where appropriate. Although this disclosure describes and illustrates a particular I/O interface, this disclosure contemplates any suitable I/O interface.

In particular embodiments, communication interface 410 includes hardware, software, or both providing one or more interfaces for communication (such as, for example, packet-based communication) between computer system 400 and one or more other computer systems 400 or one or more networks. As an example and not by way of limitation, communication interface 410 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 410 for it. As an example and not by way of limitation, computer system 400 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 400 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 400 may include any suitable communication interface 410 for any of these networks, where appropriate. Communication interface 410 may include one or more communication interfaces 410, where appropriate. Although this disclosure describes and illustrates a particular communication interface, this disclosure contemplates any suitable communication interface.

In particular embodiments, bus 412 includes hardware, software, or both coupling components of computer system 400 to each other. As an example and not by way of limitation, bus 412 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 412 may include one or more buses 412, where appropriate. Although this disclosure describes and illustrates a particular bus, this disclosure contemplates any suitable bus or interconnect.

The components of computer system 400 may be integrated or separated. In some embodiments, components of computer system 400 may each be housed within a single chassis. The operations of computer system 400 may be performed by more, fewer, or other components. Additionally, operations of computer system 400 may be performed using any suitable logic that may comprise software, hardware, other logic, or any suitable combination of the preceding.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, functions, operations, or steps, any of these embodiments may include any combination or permutation of any of the components, elements, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative.

The invention is defined by the appended claims.

## Claims

1. A system (100, 200), comprising:
a lens (140) comprising an etched pattern;
a light-emitting diode ("LED") projector (130) configured to project a pattern of light according to the etched pattern of the lens onto a surface (220) by transmitting light through the lens (140);
a first camera (110) configured to capture first data associated with the projected pattern of light; and
a second camera (120) configured to capture second data associated with the projected pattern of light, wherein the system is arranged so that the first data captured by the first camera (110) and the second data captured by the second camera (120) are used to measure profiles of the surface (220); and
one or more processors (212) configured to measure the profiles of the surface (220) based on the first data captured by the first camera (110) and the second data captured by the second camera (120),
wherein the one or more processors (212) are further configured to automatically detect a range to the surface (220) and trigger the first camera and the second camera to shutter when an optimal range to the surface is achieved.

2. The system of claim 1, wherein the projected pattern of light comprises a dot pattern; and wherein:
the first data comprises first pixel data associated with each dot of the projected pattern of light;
the second data comprises second pixel data associated with each dot of the projected pattern of light; and
the one or more processors (212) are further configured to:
determine a location of each dot of the projected pattern of light using the first pixel data and the second pixel data; and
measure profiles of the surface (220) based on the relative dot locations.

3. The system of claim 1 or claim 2, wherein the system is a hand-held, motion independent high resolution scanner (100).

4. The system of any preceding claim, wherein:
the first camera (110) and the second camera (120) are mapped to a same field of view; the projected pattern comprises a dot pattern of 100,000 dots or less within a 4-inch by 4-inch maximum field of view; and
the measured surface profiles have an accuracy of 0.001 inch or less.

5. The system of any preceding claim, wherein the one or more processors (212) are further configured to:
determine a centroid of each dot of the projected pattern of light based on the first pixel data;
determine a centroid of each dot of the projected pattern of light based on the second pixel data; and
determine the location of each dot of the projected pattern of light by triangulating the determined centroids associated with each dot based on a known, fixed relationship between the first camera and the second camera.

6. The system of any preceding claim, wherein the LED projector (130) is further configured to continuously project the pattern of light onto the surface (220) while the first camera (110) is pulsed to capture the first data associated with the continuously projected pattern of light and the second camera (120) is pulsed to capture the second data associated with the continuously projected pattern of light.

7. The system of any preceding claim, wherein:
the first camera (110) is pulsed to capture the first data associated with the projected pattern of light;
the second camera (120) is pulsed to capture the second data associated with the projected pattern of light; and
the LED projector is configured to project the pattern of light onto the surface (220) by pulsing light in synchronization with the pulse of the first camera and the pulse of the second camera.

8. The system of any preceding claim, wherein the one or more processors (212) are further configured to create a polygonised model of the surface (220) based on the relative dot locations.

9. The system of any preceding claim, wherein the measured surface profiles have an accuracy of 0.001 inch or less.

10. A method, comprising:
projecting, by a light-emitting diode ("LED") projector (130), a pattern of light according to an etched pattern of a lens (140) onto a surface (220) by transmitting light through the lens (140);
capturing, by a first camera (110), first data associated with the projected pattern of light;
capturing, by a second camera (120), second data associated with the projected pattern of light; and
measuring, by one or more processors (120), profiles of the surface (220) using the first data captured by the first camera (110) and the second data captured by the second camera (120),
wherein the one or more processors (212) are further configured to automatically detect a range to the surface (220) and trigger the first camera (110) and the second camera (120) to shutter when an optimal range to the surface is achieved.

11. The method of claim 10, wherein:
the first camera (110) and the second camera (110) are mapped to a same field of view;
the projected pattern of light comprises a dot pattern of 100,000 dots or less within a 4-inch by 4-inch maximum field of view;
the first data comprises first pixel data associated with each dot of the projected pattern of light; and
the second data comprises second pixel data associated with each dot of the projected pattern of light.

12. The method of claim 11, further comprising:
determining, by the one or more processors (212), a location of each dot of the dot pattern using the first pixel data and the second pixel data; and
measuring, by the one or more processors (212), profiles of the surface (220) based on the relative dot locations.

13. The method of any of claims 10 to 12, wherein the measured surface profiles have an accuracy of 0.001 inch or less.

14. The method of any of claims 10 to 13, further comprising continuously projecting the pattern of light onto the surface (220) while the first camera (110) is pulsed to capture the first data associated with the continuously projected pattern of light and the second camera (120) is pulsed to capture the second data associated with the continuously projected pattern of light.

## Patentansprüche

1. System (100, 200), umfassend:
eine Linse (140), die ein geätztes Muster umfasst;
einen Leuchtdioden- ("LED") Projektor (130), der eingerichtet ist, um ein Lichtmuster gemäß dem geätzten Muster der Linse auf eine Oberfläche (220) zu projizieren, indem er Licht durch die Linse (140) übermittelt;
eine erste Kamera (110), die eingerichtet ist, um erste Daten zu erfassen, die dem projizierten Lichtmuster zugeordnet sind; und
eine zweite Kamera (120), die eingerichtet ist, um zweite Daten zu erfassen, die dem projizierten Lichtmuster zugeordnet sind, wobei das System derart angeordnet ist, dass
die ersten Daten, die von der ersten Kamera (110) erfasst werden, und die zweiten Daten, die von der zweiten Kamera (120) erfasst werden, verwendet werden, um Profile der Oberfläche (220) zu messen; und
einen oder mehrere Prozessoren (212), die angeordnet sind, um die Profile der Oberfläche (220) auf Grundlage der ersten Daten, die von der ersten Kamera (110) erfasst werden, und der zweiten Daten, die von der zweiten Kamera (120) erfasst werden zu messen,
wobei die einen oder mehreren Prozessoren (212) weiter eingerichtet sind, um automatisch einen Bereich für die Oberfläche (220) zu detektieren und auszulösen, dass die erste Kamera und die zweite Kamera sich verschließen, wenn ein optimaler Bereich für die Oberfläche erreicht ist.

2. System nach Anspruch 1, wobei das projizierte Lichtmuster ein Punktmuster umfasst; und wobei:
die ersten Daten erste Pixeldaten umfassen, die jedem Punkt des projizierten Lichtmusters zugeordnet sind;
die zweiten Daten zweite Pixeldaten umfassen, die jedem Punkt des projizierten Lichtmusters zugeordnet sind; und
die einen oder mehreren Prozessoren (212) weiter eingerichtet sind, um:
einen Ort jedes Punkts des projizierten Lichtmusters unter Verwendung der ersten Pixeldaten und der zweiten Pixeldaten zu bestimmen; und
Profile der Oberfläche (220) auf Grundlage der relativen Orte der Punkte zu messen.

3. System nach Anspruch 1 oder Anspruch 2, wobei das System ein tragbarer bewegungsunabhängiger hochauflösender Scanner (100) ist.

4. System nach einem vorstehenden Anspruch, wobei:
die erste Kamera (110) und die zweite Kamera (120) auf dasselbe Sichtfeld gemapped sind; wobei das projizierte Muster ein Punktmuster von 100.000 Punkten oder weniger innerhalb eines 4-Zoll mal 4-Zoll Maximalsichtfelds umfasst; und
die gemessenen Oberflächenprofile eine Genauigkeit von 0,001 Zoll oder weniger aufweisen.

5. System nach einem vorstehenden Anspruch, die einen oder mehreren Prozessoren (212) weiter eingerichtet sind, um:
einen Schwerpunkt jedes Punkts des projizierten Lichtmusters auf Grundlage der ersten Pixeldaten zu bestimmen;
einen Schwerpunkt jedes Punkts des projizierten Lichtmusters auf Grundlage der zweiten Pixeldaten zu bestimmen; und
den Ort jedes Punkts des projizierten Lichtmusters durch Triangulieren der bestimmten jedem Punkt zugeordneten Schwerpunkte auf Grundlage einer bekannten festen Beziehung zwischen der ersten Kamera und der zweiten Kamera zu bestimmen.

6. System nach einem vorstehenden Anspruch, wobei der LED-Projektor (130) weiter eingerichtet ist, um kontinuierlich das Lichtmuster auf die Oberfläche (220) zu projizieren, während die erste Kamera (110) gepulst wird, um die dem kontinuierlich projizierten Lichtmuster zugeordneten ersten Daten zu erfassen, und die zweite Kamera (120) gepulst wird, um die dem kontinuierlich projizierten Lichtmuster zugeordneten zweiten Daten zu erfassen.

7. System nach einem vorstehenden Anspruch, wobei:
die erste Kamera (110) pulsiert wird, um die dem projizierten Lichtmuster zugeordneten ersten Daten zu erfassen;
die zweite Kamera (120) pulsiert wird, um die dem projizierten Lichtmuster zugeordneten zweiten Daten zu erfassen; und
der LED-Projektor eingerichtet ist, um das Lichtmuster auf die Oberfläche (220) zu projizieren, indem er Licht in Synchronisation mit dem Puls der ersten Kamera und dem Puls der zweiten Kamera pulsiert.

8. System nach einem vorstehenden Anspruch, wobei die einen oder mehreren Prozessoren (212) weiter eingerichtet sind, um ein polygonisiertes Modell der Oberfläche (220) auf Grundlage der relativen Orte der Punkte zu erzeugen.

9. System nach einem vorstehenden Anspruch, wobei die gemessenen Oberflächenprofile eine Genauigkeit von 0,001 Zoll oder weniger aufweisen.

10. Verfahren, umfassend:
Projizieren eines Lichtmusters gemäß einem geätzten Muster einer Linse (140) auf eine Oberfläche (220) durch Übermitteln von Licht durch die Linse (140) mit einem Leuchtdioden- ("LED") Projektor (130);
Erfassen von ersten Daten, die dem projizierten Lichtmuster zugeordnet sind mit einer ersten Kamera (110);
Erfassen von zweiten Daten, die dem projizierten Lichtmuster zugeordnet sind mit einer zweiten Kamera (120);
Messen von Profilen der Oberfläche (220) unter Verwendung der ersten Daten, die von der ersten Kamera (110) erfasst werden, und der zweiten Daten, die von der zweiten Kamera (120) erfasst werden, mit einem oder mehreren Prozessoren (120);
wobei die einen oder mehreren Prozessoren (212) weiter eingerichtet sind, um automatisch einen Bereich für die Oberfläche (220) zu detektieren und auszulösen, dass die erste Kamera (110) und die zweite Kamera (120) sich verschließen, wenn ein optimaler Bereich für die Oberfläche erreicht ist.

11. Verfahren nach Anspruch 10, wobei:
die erste Kamera (110) und die zweite Kamera (110) auf dasselbe Sichtfeld gemapped sind;
das projizierte Lichtmuster ein Punktmuster von 100.000 Punkten oder weniger innerhalb eines 4-Zoll mal 4-Zoll Maximalsichtfelds umfasst;
die ersten Daten erste Pixeldaten umfassen, die jedem Punkt des projizierten Lichtmusters zugeordnet sind; und
die zweiten Daten zweite Pixeldaten umfassen, die jedem Punkt des projizierten Lichtmusters zugeordnet sind.

12. Verfahren nach Anspruch 11, weiter umfassend:
Bestimmen eines Orts jedes Punkts des Punktmusters unter Verwendung der ersten Pixeldaten und der zweiten Pixeldaten mit den einen oder mehreren Prozessoren (212); und
Messen von Profilen der Oberfläche (220) auf der Grundlage der relativen Orte der Punkte mit den einen oder mehreren Prozessoren (212).

13. Verfahren nach einem der Ansprüche 10 bis 12, wobei die gemessenen Oberflächenprofile eine Genauigkeit von 0,001 Zoll oder weniger aufweisen.

14. Verfahren nach einem der Ansprüche 10 bis 13, weiter umfassend ein kontinuierliches Projizieren des Lichtmusters auf die Oberfläche (220), während die erste Kamera (110) gepulst wird, um die dem kontinuierlich projizierten Lichtmuster zugeordneten ersten Daten zu erfassen, und die zweite Kamera (120) gepulst wird, um die dem kontinuierlich projizierten Lichtmuster zugeordneten zweiten Daten zu erfassen.

## Revendications

1. Système (100, 200), comprenant :
une lentille (140) comprenant un motif gravé ;
un projecteur à diode électroluminescente (« LED ») (130) configuré pour projeter un motif de lumière selon le motif gravé de la lentille sur une surface (220) en transmettant la lumière à travers la lentille (140) ;
un premier appareil de prise de vues (110) configuré pour capturer des premières données associées au motif de lumière projeté ; et
un second appareil de prise de vues (120) configuré pour capturer des secondes données associées au motif de lumière projeté, dans lequel le système est agencé de sorte que
les premières données capturées par le premier appareil de prise de vues (110) et
les secondes données capturées par le second appareil de prise de vues (120) sont utilisées pour mesurer des profils de la surface (220) ; et
un ou plusieurs processeurs (212) configurés pour mesurer les profils de la surface (220) sur la base des premières données capturées par le premier appareil de prise de vues (110) et des secondes données capturées par le second appareil de prise de vues (120),
dans lequel le ou les plusieurs processeurs (212) sont en outre configurés pour détecter automatiquement une portée jusqu'à la surface (220) et pour déclencher le premier appareil de prise de vues et le second appareil de prise de vues en obturation quand une portée optimale jusqu'à la surface est atteinte.

2. Système selon la revendication 1,
dans lequel le motif de lumière projeté comprend un motif de points ; et dans lequel :
les premières données comprennent des premières données de pixel associées à chaque point du motif de lumière projeté ;
les secondes données comprennent des secondes données de pixel associées à chaque point du motif de lumière projeté ; et
le ou les plusieurs processeurs (212) sont en outre configurés pour :
déterminer un emplacement de chaque point du motif de lumière projeté en utilisant les premières données de pixel et les secondes données de pixel ; et
mesurer des profils de la surface (220) sur la base des emplacements de point relatifs.

3. Système selon la revendication 1 ou la revendication 2, dans lequel le système est un scanner à main (100), haute résolution, indépendant du mouvement.

4. Système selon l'une quelconque des revendications précédentes, dans lequel :
le premier appareil de prise de vues (110) et le second appareil de prise de vues (120) sont mis en correspondance sur un même champ de vision ; le motif projeté comprend un motif de points de 100 000 points ou moins à l'intérieur d'un champ de vision maximal de 4 pouces par 4 pouces ; et
les profils de surface mesurés ont une précision de 0,001 pouce ou moins.

5. Système selon l'une quelconque des revendications précédentes, dans lequel le ou les plusieurs processeurs (212) sont en outre configurés pour :
déterminer un centre de gravité de chaque point du motif de lumière projeté sur la base des premières données de pixel ;
déterminer un centre de gravité de chaque point du motif de lumière projeté sur la base des secondes données de pixel ; et
déterminer l'emplacement de chaque point du motif de lumière projeté en triangulant les centres de gravité déterminés associés à chaque point sur la base d'une relation fixe connue entre le premier appareil de prise de vues et le second appareil de prise de vues.

6. Système selon l'une quelconque des revendications précédentes, dans lequel le projecteur à LED (130) est en outre configuré pour projeter continuellement le motif de lumière sur la surface (220) tandis que le premier appareil de prise de vues (110) est pulsé pour capturer les premières données associées au motif de lumière continuellement projeté et que le second appareil de prise de vues (120) est pulsé pour capturer les secondes données associées au motif de lumière projeté continuellement.

7. Système selon l'une quelconque des revendications précédentes, dans lequel :
le premier appareil de prise de vues (110) est pulsé pour capturer les premières données associées au motif de lumière projeté ;
le second appareil de prise de vues (120) est pulsé pour capturer les secondes données associées au motif de lumière projeté ; et
le projecteur à LED est configuré pour projeter le motif de lumière sur la surface (220) en pulsant la lumière en synchronisation avec l'impulsion du premier appareil de prise de vues et l'impulsion du second appareil de prise de vues.

8. Système selon l'une quelconque des revendications précédentes, dans lequel le ou les plusieurs processeurs (212) sont en outre configurés pour créer un modèle polygonisé de la surface (220) sur la base des emplacements de point relatifs.

9. Système selon l'une quelconque des revendications précédentes, dans lequel les profils de surface mesurés ont une précision de 0,001 pouce ou moins.

10. Procédé, comprenant :
la projection, par un projecteur à diode électroluminescente (« LED ») (130), d'un motif de lumière selon un motif gravé d'une lentille (140) sur une surface (220) en transmettant la lumière à travers la lentille (140) ;
la capture, par un premier appareil de prise de vues (110), de premières données associées au motif de lumière projeté ;
la capture, par un second appareil de prise de vues (120), de secondes données associées au motif de lumière projeté ; et
la mesure, par un ou plusieurs processeurs (120), de profils de la surface (220) en utilisant les premières données capturées par le premier appareil de prise de vues (110) et les secondes données capturées par le second appareil de prise de vues (120),
dans lequel le ou les plusieurs processeurs (212) sont en outre configurés pour détecter automatiquement une portée jusqu'à la surface (220) et pour déclencher le premier appareil de prise de vues (110) et le second appareil de prise de vues (120) en obturation quand une portée optimale jusqu'à la surface est atteinte.

11. Procédé selon la revendication 10, dans lequel :
le premier appareil de prise de vues (110) et le second appareil de prise de vues (110) sont mis en correspondance sur un même champ de vision ;
le motif de lumière projeté comprend un motif de points de 100 000 points ou moins dans un champ de vision maximal de 4 pouces par 4 pouces ;
les premières données comprennent des premières données de pixel associées à chaque point du motif de lumière projeté ; et
les secondes données comprennent des secondes données de pixel associées à chaque point du motif de lumière projeté.

12. Procédé selon la revendication 11, comprenant en outre :
la détermination, par le ou les plusieurs processeurs (212), d'un emplacement de chaque point du motif de points en utilisant les premières données de pixel et les secondes données de pixel ; et
la mesure, par le ou les plusieurs processeurs (212), de profils de la surface (220) sur la base des emplacements de point relatifs.

13. Procédé selon l'une quelconque des revendications 10 à 12, dans lequel les profils de surface mesurés ont une précision de 0,001 pouce ou moins.

14. Procédé selon l'une quelconque des revendications 10 à 13, comprenant en outre la projection continue du motif de lumière sur la surface (220) tandis que le premier appareil de prise de vues (110) est pulsé pour capturer les premières données associées au motif de lumière projeté continuellement et le second appareil de prise de vues (120) est pulsé pour capturer les secondes données associées au motif de lumière projeté continuellement.
